Europäisches Patentamt

European Patent Office

Office européen des brevets

(11) Publication number: **0 279 279**
**A2**

## (12) EUROPEAN PATENT APPLICATION

(21) Application number: **88101539.0**

(22) Date of filing: **03.02.88**

(51) Int. Cl.⁴: **C09J 3/14** , **B42C 9/00** , **C08L 53/02**

(30) Priority: **18.02.87 US 16028**

(43) Date of publication of application:
**24.08.88 Bulletin 88/34**

(84) Designated Contracting States:
**AT BE CH DE ES FR GB GR IT LI LU NL SE**

(71) Applicant: **National Starch and Chemical Corporation**
**Finderne Avenue P.O. Box 6500**
**Bridgewater, N.J. 08807 (New Jersey)(US)**

(72) Inventor: **Flanagan, Thomas P.**
**423 Rock Avenue, Ext.**
**Green Brook New Jersey 08812(US)**
Inventor: **Cline, Charles W.**
**RD 3, Box 420**
**Stockton New Jersey 08559(US)**

(74) Representative: **Hagemann, Heinrich,**
**Dr.rer.nat. et al**
**Patentanwälte GEYER, HAGEMANN & KEHL**
**Postfach 860329**
**D-8000 München 86(DE)**

(54) Hot melt adhesive composition for casing in hardcover books.

(57) A hard bound book is cased-in by bonding the endpapers of the book block to a pre-formed case using a hot melt pressure sensitive adhesive composition comprising:

a) 20 to 35% by weight of an A-B-A block or A-B-A-B-A-B multi-block copolymer where the A component is styrene and the B component is butadiene or hydrogenated butadiene and the copolymer contains at least 28 parts styrene per 100 parts copolymer;

b) 45 to 70% by weight of a compatible tackifying resin;

c) 5 to 30% by weight of a plasticizing oil;

d) 0 to 5% by weight of a wax; and

e) 0.1 to 2% by weight of a stabilizer.

EP 0 279 279 A2

# HOT MELT ADHESIVE COMPOSITION FOR CASING IN HARDCOVER BOOKS

In the manufacture and binding of hardcover books (also referred to as "case bound" or "edition bound"), one of the last operations is the "casing-in" process wherein the book block is fastened into its hard cover or "case". More specifically, book covers or cases for hardbound books are comprised of a "sandwich" or laminate consisting of the cover material, a casemaking adhesive, and a cover board. The pre-formed case is then joined to the end sheets of a book block to found the completed book cover.

In general, the casing-in process includes the following four basic steps:

(1) An adhesive is evenly applied to the outside of both the first and last pages ("endpapers" or "end sheets") of the book block positioned either manually or mechanically astride a flat, metal, vertical plate called a "wing". The wing then mechanically lifts the book block, drawing it between a pair of rollers that applies the adhesive to the outer endpapers.

(2) The adhesive-coated book block is inserted into a pre-formed case in the position in which the two are to be adhered. The adhesive application operation and case forming operation are usually synchronized so the book and cover meet at their respective spines as the book is lifted through the adhesive-dispensing rollers. As the wing continues to rise, the front and back sides of the cover drape around the book block.

(3) The book block and case are pressed together so the glue or adhesive will bond both together. Conventionally, this step is performed mechanically before the cased-in book is ejected or it may be performed manually by removing and clasping the book block-and-case unit from its wing.

(4) Casing-in is immediately followed by a separate and distinct bindery operation called "building-in", in which heat and pressure are applied to the book so it will lay flat after drying. The hard cover, or case, containing the book block is subjected to pressure and sometimes heat at its joints between a pair of metal "forming irons" which curves the cases' joint into conformity with the shape of the book block's joint.

A number of problems and shortcomings are inherent to these methods for casing-in. Book blocks and cases, while being processed, are subject to continuous stopping and starting, and abrupt and awkward movements. This invites questionable and uneven performance, considerable maintenance, slow operation, and recurrent breakdowns, all contributing to high production costs.

In some cases, as when the book blocks are bound with emulsion adhesives, a drying period before casing-in is required to permit the adhesive binding to set. A direct transition from binding to casing-in before the requisite drying period elapses would place undue stress on the adhesive binding, occasioning distortion, mangling, or misalignment of the book and hence considerable spoilage. In these cases, the book blocks are often piled on skids until dry prior to casing-in, thereby causing delays and requiring additional labor. This process, moreover, brings about another problem. The book blocks towards the bottom of the pile tend to become compressed under the natural weight of the book blocks above. The rollers that apply the glue or paste in the casing-in machine, however, must be adjusted and spaced within close tolerances. Accordingly, the casing-in machine's operator must continually stop the equipment to readjust the rollers. Failure to do so accurately results in excessive adhesive application on the thicker book units (called "creepage"), whereby the overabundant adhesive creeps over the edges of the book block and bonds together several outer pages), or insufficient adhesive application on the thinner book blocks towards the bottom of the pile. Depending upon the shape of the book blocks to be cased-in, as many as three sets of rollers must therefore be continually readjusted. The use of multiple pairs of rollers, moreover, requires the waste of larger quantities of adhesive when the "glue pots" are cleaned at the completion of an operating schedule.

Additionally, it is often necessary for an operator to realign manually the book block within its case after the two have been pressed together. Misalignment occurs frequently because of the abrupt, starting-and stopping movements inherent in the equipment. In addition to the extra labor required, in some cases the misalignment is so severe that the book block and case must be separated by hand and reprocessed. Before recycling, however, the book block must be allowed to dry to prevent adhesive from fouling the equipment's mechanisms.

The multiple and complex steps described above either place stringent demands upon the adhesive employed or the steps themselves must be carefully monitored and adjusted to compensate for the deficiencies of the adhesives. As an example, the water-borne adhesives which are generally used have a limited amount of open time within which the bond must be formed. Consequently, during machinery slow-downs or shut-downs, the required aggressive tack is often lost resulting in poor bonds and rejected stock. Additionally, the use of the water-based adhesives, even with sufficient drying times involved, often permits moisture to seep through the end papers onto the pages of the book causing these pages to wrinkle.

If the now complete books were permitted to dry as is, they would warp badly. Water introduced into the case via the historically used water borne adhesive causes another major problem which is particularly severe in low humidity situations. Water from the water borne adhesive is absorbed by the case boards. The case board is relatively thick and the water contacts case board from the inside of the case. The outside of the case board is typically held in position and restricted from movement by the case cloth or cover material. This creates a layered or one sided swelling of the paper fibers of the board stock which results in warping of the covers. Cover warping is a constant problem and exaggerated substantially in winter time when board stock is normally drier. If the cased in books (bonded with waterborne adhesives) could be put into a book press immediately after casing in and left till all the added water reached equilibrium distribution throughout the book the cover warp problem would be corrected. This, of course, takes an inordinate amount of time and is not possible on a continuous production line.

We have now found that pressure sensitive hot melt compositions prepared from A-B-A type block and multi-block copolymers are particularly useful in the casing-in operations.

Thus, the present invention is directed to a process for casing-in a hard bound book wherein the book is fastened or mounted in the case using a hot melt pressure sensitive adhesive composition comprising:

a) 20 to 35% by weight of an A-B-A or A-B-A-B-A multi-block copolymer where the A component is styrene and the B component is butadiene or hydrogenated butadiene and the copolymer contains at least 28 parts styrene per 100 parts copolymer;

b) 45 to 70% by weight of a compatible tackifying resin;

c) 5 to 30% by weight of a plasticizing oil;

d) 0 to 5% by weight of a wax; and

e) 0.1 to 2% by weight of a stabilizer.

More particularly, the present invention is directed to the use of a hot melt adhesive composition especially adapted for the above described process the hot melt adhesives containing as the block copolymer a multi-block styrene-butadiene copolymer containing at least 35 parts styrene per 100 parts copolymer.

In the primary component of the adhesive compositions used in the present invention are block or multi-block copolymers having the general configuration:

A-B-A or A-B-A-B-A-B

wherein the polymer blocks A are non-elastomeric styrene blocks, while the elastomeric polymer blocks B are butadiene or butadiene which is partially or substantially hydrogenated as taught, for example, in U.S. Pat. No. 3,700,633 issued Oct. 24, 1972 to Wald et al. Selected conditions may be employed for example to hydrogenate the elastomeric butadiene block while not so modifying the styrene polymer blocks. Other conditions may be chosen to hydrogenate substantially uniformly along the polymer chain, both the elastomeric and non-elastomeric blocks thereof being hydrogenated to practically the same extent, which may be either partial or substantially complete. Further, they may be linear or branched. Typical branched structures contain an elastomeric portion with at least three branches which can radiate out from a central hub or can be otherwise coupled together.

Typical of the rubbery copolymers useful herein are the polystyrene-polybutadiene-polystyrene, and e.g. polystyrene-poly-(ethylenebutylene)-polystyrene. These copolymers may be prepared using methods taught, for example, in U.S. Pat. Nos. 3,239,478 issued March 8, 1966 to Harlan; 3,427,269 issued Feb. 11, 1969 to Davis; 3,700,633 issued Oct. 24, 1972 to Wald et al; 3,753,936 issued Aug. 21, 1973 to Marrs; and 3,932,327 issued Jan. 13, 1976 to Naylor. Alternatively, some may be obtained from Shell Chemical Co. under the trademarks Kraton 1101, 1102, 1650, 1652 and 1657 and from Phillips Chemical Co. under the trademarks Solprene 418 and 423.

Most preferred for use herein are the linear A-B-A-B-A multi-block copolymers where the elastomeric block is butadiene and the non-elastomeric block is styrene and the latter is present in relatively high concentrations, i.e. at levels of 35% or above. Block copolymers marketed commercially at this time which meet the above described requirements are available from Firestone under the tradenames Stereon 840A (57 parts butadiene and 43 parts styrene) and Stereon SR 7092 (50 parts butadiene and 50 parts styrene). Blends of these high styrene containing copolymers with other compatable block copolymers may also be employed.

The tackifying resins useful in the adhesive compositions can be hydrocarbon resins, synthetic polyterpenes, rosin esters, natural terpenes, and the like. More particularly, the useful tackifying resins include any compatible resins or mixtures thereof such as (1) natural and modified rosins such, for example, as gum rosin, wood rosin, tall oil, rosin, distilled rosin, hydrogenated rosin, dimerized rosin, and polymerized rosin; (2) glycerol and pentaerythritol esters of natural and modified rosins, such, for example as the glycerol ester of pale, wood rosin, the glycerol ester of hydrogenated rosin, the glycerol ester of the phenolic-modified pentaerythritol ester of rosin; (3) copolymers and terpolymers of natured terpenes, e.g. styrene/terpene and alpha methyl styrene/terpene; (4) polyterpene resins having a softening point, as determined by ASTM method E28-58T, of from about 80 to 150°C; the latter polyterpene resins generally resulting from the polymerization of terpene hydrocarbons, such as the bicylic monoterpene known as pinene, in the presence of Friedel-Crafts catalysts at moderately low temperatures; also included are the hydrogenated polyterpene resins; (5) phenolic modified terpene resins are hydrogenated derivatives thereof such, for example, as the resin product resulting from the condensation, in an acidic medium, of a bicyclic terpene and a phenol; (6) aliphatic petroleum hydrocabon resins having a Ball and Ring softening point of from about 70 to 135°C.; the latter resins resulting from the polymerization of monomers consisting of primarily of olefins and diolefins; also included are the hydrogenated·aliphatic petroleum hydrocarbon resins; (7) aromatic petroleum hydrocarbon resins and the hydrogenated derivatives thereof; and (8) alicyclic petroleum hydrocarbon resins and the hydrogenated derivatives thereof. Mixtures of two or more of the above described tackifying resins may be required for some formulations.

The selection of the particular tackifying agent is, in large part, dependent upon the specific block copolymer employed. The preferred adhesive formulations for use herein which employ the linear multi-block Stereon type copolymers provide optimum properties when tackifiers of modified terpene having Ring and Ball softening point of about 100-120°C. such as Zonatac 105 are employed.

Among the applicable stabilizers or antioxidants utilized herein are included high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are submitted onto the benzene ring in at least one of the ortho positions relative to the phenolic hydroxy group. The presence of these sterically bulky substituted radicals in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris (3,5-di-tert-butyl-4-hydroxybenzyl)benzene; pentaerythrityl tetrakis-3(3,5-di-tert-butyl-4-hydroxyphenyl)proptionate; n-octadecyl-3(3,5-di-tert-butyl-4-hydroxyphenyl)-propionate; 4,4'-methylenbis (2,6-tert-butylphenol); 4,4'-thiobis (6-tert-butyl-o-cresol); 2,6-di-tertbutylphenol; 6-(4-hydroxyphenoxy)-2,4-bis(n-octyl-thio)-1,3,5triazine; di-n-octadecyl 3,5-di-tert-butyl-4-hydroxy-benzylphosphonate; 2-(n-octyl-thio)ethyl 3,5-di-tert-butyl-4-hydroxy-benzoate; and sorbitol hexa[3-(3,5-di-tert-butyl-4-hydroxyphenyl)-propionate].

The performance of these antioxidants may be further enhanced by utilizing, in conjunction therewith known synergists such, for example, as thiodipropionate esters and phosphites, particularly useful is distearylthiodipropionate.

These stabilizers, if used, are generally present in amounts of about 0.1 to 1.5 weight percent, preferably 0.25 to 1.0%.

Various plasticizing or extending oils are also present in the composition in amounts of 5% to about 30%, preferably 5 to 25%, by weight in order to provide wetting action and/or viscosity control. The above broadly includes not only the usual plasticizing oils but also

Various plasticizing or extending oils are also present in the composition in amounts of 5% to about 30%, preferably 5 to 25%, by weight in order to provide wetting action and/or viscosity control. The above broadly includes not only the usual plasticizing oils but also contemplates the use of olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, or particularly, less than 15% by weight of the oil). Alternatively, the oil may be totally non-aromatic. The oligomers may be polypropylenes, polybutenes, hydrogenated polyisoprene, hydrogenated polybutadiene, or the like having aveage molecular weights between about 350 and about 10,000. Vegetable and animal oils include glyceryl esters of the usual fatty acids and polymerization products thereof.

Various derived waxes may also be used in amounts less than about 15% by weight of the composition in order to impart fluidity in the molten condition of the adhesive and flexibility to the set adhesive, and to serve as a wetting agent for bonding cellulosic fibers. The waxes may be derived from petroleum or other sources including gas, coal and hydrocarbons. The term "petroleum derived wax" includes both paraffin and microcrystalline waxes having melting points within the rane of 130-225°F. as well as synthetic waxes such a low molecular weight polyethylene or Fisher-Tropsch waxes.

Additionally there may be added to the hot melt adhesive composition up to about 10% by wieght of an ethylene vinyl acetate copolymer containing 17 to 42% vinyl acetate as a reinforcing agent and/or to promote adhesion to certain substrates. The adhesive compositions are prepared by blending the components in the melt at a temperature of about 130-200°C. until a homogeneous blend is obtained, approximately 2 hours. Various methods of blending are known to the art and any method that produces a homogeneous blend is satisfactory.

The resultant adhesives are then used in the casing-in operation to mount the book into the case. The process is adaptable to use with book blocks bound with adhesives, by sewing or by other mechanical processes. The backbones may be flat-backed or rounded.

EXAMPLE

Ten parts white USP mineral oil and 0.2 parts Irganox 1010 antioxidant were blended with 21 parts Stereon 840A at 325°F (165°C). When the blend was homogeneous, 9 additional parts oil were added followed by 60 parts Escorez 2393, an aliphatic aromatic hydrocarbon tackifier from Exxon.

The resulting pressure sensitive adhesive exhibited an initial viscosity (Brookfield Thermosel Viscometer) of 2100 cps when measured at 325°F (165°C) and 670 cps after 72 hours storage at 350°F (175°C).

Release paper was inserted under one end sheet of a McCain sewn bound book block. The end sheet was then coated with the previously described hot melt adhesive using a hot glass rod to draw down the hot melt. Excess hot melt was trimmed from the end sheet-release paper interface. The adhesive coated end sheet was then attached to the inside cover of a pre-formed book case and the procedure repeated on the other face of the book block. No wrinkling was noted in the book block, and no warpage of the case was observed.

Similar results would be obtained using other hot melt pressure sensitive adhesive compositions based on styrene-butadiene block copolymers provided the styrene is present in an amount of at least about 28 parts per 100 copolymer.

**Claims**

1. A process for casing-in a hardcover book comprising the steps of:

(a) applying a hot melt pressure sensitive adhesive to the outside of the first and last pages of a book block;

(b) inserting the adhesive coated book block into a pre-formed case in the position in which the two are to be adhered; and

(c) pressing together the book block and case so as to bond both together;

wherein the hot melt pressure sensitive adhesive composition comprises:

(a) 20 to 35% by weight of an A-B-A block or A-B-A-B-A-B multi-block copolymer where a component is styrene and the B component is butadiene or hydrogenated butadiene and the copolymer contains at least 28 parts styrene per 100 parts copolymer;

(b) 45 to 70% by weight of a compatible tackifying resin;

(c) 5 to 30% by weight of a plasticizing oil;

(d) 0 to 5% by weight of a wax; and

(e) 0.1 to 2% by weight of a stabilizer.

2. A process for casing-in a hardcover book comprising the steps of:

(a) applying a hot melt pressure sensitive adhesive to the outside of the first and last pages of a book block;

(b) inserting the adhesive coated book block into a pre-formed case in the position in which the two are to be adhered; and

(c) pressing together the book block and case so as to bond both together;

wherein the hot melt pressure sensitive adhesive composition comprises:

(a) 20 to 35% by a weight of an A-B-A-B-A-B multi-block copolymer wherein the A component is styrene and the B component is butadiene and wherein the styrene component is present in an amount of at least 35 parts per 100 parts of the copolymer;

(b) 45 to 70% by a weight of a compatible tackifying resin;

(c) 5 to 30% by weight of a plasticizing oil;

(d) 0 to 5% by a weight of a wax; and

(e) 0.1 to 2% by weight of a stabilizer.

3. The process of Claim 1 or 2 wherein the tackifier in the hot melt adhesive composition is any compatible resin or mixture thereof selected from the group consisting of (1) natural and modified rosins: (2) glycerol and pentaerythritol esters of natural and modified rosins: (3) copolymers and terpolymers of natured terpenes; (4) polyterpene resins having a softening point, as determined by ASTM method E28-58T, of from about 80° to 150°C; (5) phenolic modified terpene resins and hydrogentaed derivatives thereof; (6) aliphatic petroleum hydrocarbon resins having a Ball and Ring softening point of from about 70° to 135°C/; (7) aromatic petroleum hydrocarbon resins and the hydrogenated derivatives thereof; and (8) alicyclic petroleum hydrocarbon resins and the hydrogenated derivatives thereof.

4. The process of Claim 1 or 2 wherein there is additionally present in the hot melt adhesive up to 10% of an ethylene vinyl acetate copolymer containing 17 to 42% vinyl acetate.

5. The process of Claim 2 wherein the block copolymer in the adhesive comprises 57 parts butadiene and 43 parts styrene.

6. The process of Claim 2 wherein the block copolymer in the adhesive comprises 50 parts butadiene and 50 parts styrene.

7. The process of Claim 2 wherein the tackifying resin in the adhesive is a modified terpene resin having a Ring and Ball softening point of about 100-120 C or an aromatic petroleum hydrocarbon resin or hydrogenated derivative therof.

8. A hardcover book cased-in utilizing the process of Claim 1 or 2.